# EUROPEAN PATENT APPLICATION

(11) **EP 3 832 454 A1**
(43) Date of publication of application: **09.06.2021**
(21) Application number: 19214316.2
(22) Date of filing: 07.12.2019
(51) Int. Cl.: G06F 8/10, G06F 8/35, G06F 11/26, G06F 11/36, G06F 11/07, G06N 3/08

(54) **DEVELOPMENT PROCESS FOR AN AUTOMOTIVE PRODUCT**

(71) Applicant: Emm! solutions GmbH, 71263 Weil der Stadt (DE)
(72) Inventor: Müller, Armin, 71263 Weil der Stadt (DE)
(74) Representative: Meyer zu Bexten, Elmar

(57) **Abstract**

**Problem**

According to the state of the art, data is recorded and evaluated during manual or automated, preferably supervised testing. Such data may include, for example, configuration data assigned controlling the element build process, calibration data applied as software parameter values after the software build, or field data such as cumulative operating hours, failures, and in-service safety anomalies. Also, the storage of data using IT systems has become common practice. However, an evaluation of processing status remains complex owing to the dispersed nature of these systems and the quantity of data being collected. Unrecognized errors during processing may ensue.

**Solution**

Development process (10) for an automotive product
wherein
IT systems store data acquired throughout multiple sub-phases (11, 12, 13, 14, 15) of the process (10),
characterized in that
an observer (16) reports any deviation of the data and
an optimizer (17) proposes action to correct the deviation.

## Description

### Technical Field

The invention relates to the process as per the first portion of the independent claims.

### Background Art

In the context of new transportation concepts, vehicles are controlled according to demand, infrastructure, and traffic at hand. The state-of-the-art vehicle proposed in PTL1 consists of a platform (rolling chassis) such as per PTL2, drive-by-wire system, control unit (consolidating environmental information and managing the actual trip) such as per PTL3, and body comprising interior and exterior work designed for a given transport task.

Due to its heavily networked functionality, development and integration of the control unit are highly critical in terms of functional safety, that is, the absence of unreasonable risk due to hazards caused by malfunctioning behaviour of the unit. The achievement of functional safety in turn is influenced by the development process (including such activities as requirements specification, design, implementation, integration, verification, validation and configuration), the production and service processes, and the management processes.

Safety is intertwined with common function-oriented and quality-oriented activities and work products. The ISO 26262 series of standards addresses the safety-related aspects of these activities and work products. Particularly, ISO 26262-4:2018 through ISO 26262-6:2018 pertain to product development at the system, hardware, and software level, respectively, and define sub-phases such as requirements specification, design, integration and testing, or release for production.

### Summary of invention

The invention as claimed is hereinafter disclosed in such a way that the technical problem with which it deals can be appreciated and the solution can be understood.

### Technical Problem

The vision of future mobility calls for an automated, zero-emission, and accident-free transport system. For such automated transport, intended functionality and compliance with standards, especially those relating to functional safety, will be essential. Within processing logics, these requirements come down to software, hardware, and mechanical designs. Finally, tests are carried out to check whether those requirements have been met.

Since many hazards arise during highly automated driving, those hazards being addressed along varied paths throughout the workflow, there is a risk of incompletely executed work processes, incomplete or ambiguous confirmation through testing, or insufficiently recorded hazards and severity.

Moreover, due to the multitude of work steps, the safeguarding process for automated driving can be time-consuming and tedious.

According to the state of the art, data is recorded and evaluated during manual or automated, preferably supervised testing. Such data may include, for example, configuration data assigned controlling the element build process, calibration data applied as software parameter values after the software build, or field data such as cumulative operating hours, failures, and in-service safety anomalies. Also, the storage of data using IT systems has become common practice. However, an evaluation of processing status remains complex owing to the dispersed nature of these systems and the quantity of data being collected. Unrecognized errors during processing may ensue.

### Solution to Problem

The solution involves integrating an intelligent observer and optimizer into the processing sequence. Such observer considers the procedural rules governing the entire development cycle from risk assessment to validation testing. It verifies the integrity of completed workflows and their results according to logical rules and, by means of a self-learning model, scans them for safety anomalies, that is, conditions that deviate from expectations and can lead to harm. Potential deviations that may be uncovered by the observer could be defined with respect to nominal conditions laid down in the form of requirements, specifications, design documents, user documents, standards, or similar.

The optimizer notes these deviations and offers suggestions on how to correct them. The system may then resolve the problem automatically if desired.

In addition, the observer can be combined with hazard detection and analysis using external Al systems. The results are used to check whether there is a correlation between hazard and system acceptance status and thus whether the system is operated within safeguarded boundaries. This feedback is then applied for corrective action or continuous learning.

### Advantageous effect of invention

The proposed process observation procedures contribute to the functional safety of the system and thus ultimately to the protection from physical injury or damage to the health of persons. They also serve to accelerate processing, reduce manual intervention, and minimize cost. Furthermore, an embodiment of the invention allows for an assessment of process integrity and may therefore pose a factor in the decision on acceptance of a release candidate.

It should also be noted that the suggested techniques are applicable to any function and may be combined with any configuration of IT systems that allow access to the data. Finally, these procedures can be paired with external Al-based analysis systems, opening a wide range of further applications.

### Brief description of drawings

The sole figure depicts process observation procedures.

### Description of embodiments

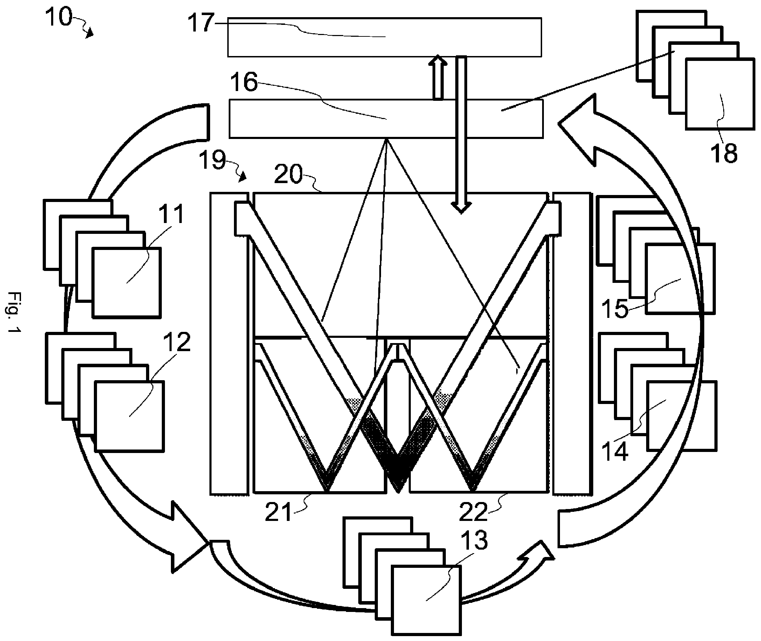

Figure 1 illustrates the functional components of a development process (10) for an automotive product in compliance with ISO 26262. With said standard being based upon the well-established V-model as a reference process model for the different phases (11, 12, 13, 14, 15) of product development, the V-shapes in the drawing intuitively represent the interconnection between product development at the system (20), hardware (21), and software level (22). The conventional sub-phases (11, 12, 13, 14, 15) of such process (10) encompass requirements specification (11), design (12), build (13), test (14), and release (15) of the product under development.

In the present embodiment, various IT systems store data acquired throughout these sub-phases (11, 12, 13, 14, 15) in the form of documents (18). As per the invention, an observer (16) checks dependency of that data and reports any deviation thereof with respect to a nominal condition.

In an advanced embodiment, the observer (16) may be connected to an external Al-based system for hazard identification and analysis. Owing to its self-learning capabilities, that system is gradually improved from each cycle of the iterative process (10) to the next.

Ultimately, the observer (16) passes its findings to an optimizer (17), who proposes action to correct the identified deviation and, if desired, takes that corrective action automatically.

It is noted that ISO 26262 should be applied not only to safety-related, but to all functions of the product.

### Industrial applicability

The invention is applicable, among others, throughout the automotive and robotics industries.

### Reference signs list

- 10: Development process
- 11: Requirements specification
- 12: Design
- 13: Build
- 14: Test
- 15: Release
- 16: Observer
- 17: Optimizer
- 18: Documents
- 19: ISO 26262 development model
- 20: Product development at the system level
- 21: Product development at the hardware level
- 22: Product development at the software level

### Citation list

The following documents are cited hereinbefore.

### Patent literature

PTL1: EP 3517337 A (EMM! SOLUTIONS GMBH [DE]) 31.07.2019
PTL2: WO 2018/177642 A (EMM! SOLUTIONS GMBH [DE]) 04.10.2018
PTL3: EP 3534226 A (EMM! SOLUTIONS GMBH [DE]) 04.09.2019

## Claims

1. Development process (10) for an automotive product
wherein
IT systems store data acquired throughout multiple sub-phases (11, 12, 13, 14, 15) of the process (10),
**characterized in that**
an observer (16) reports any deviation of the data and
an optimizer (17) proposes action to correct the deviation.

2. Process (10) as per Claim 1
wherein
the optimizer (17) automatically takes the corrective action.

3. Process (10) as per Claim 1 or Claim 2
wherein
the data takes the form of a document (18).

4. Process (10) as per any of the preceding claims
wherein
the observer (16) checks dependencies of the data.

5. Process (10) as per any of the preceding claims
wherein
the observer (16) reports the deviation with respect to a nominal condition.

6. Process (10) as per any of the preceding claims
wherein
the process (10) complies with a development model (19) as per ISO 26262.

7. Process (10) as per any of the preceding claims
wherein
the sub-phases (11, 12, 13, 14, 15) encompass requirements specification (11), design (12), build (13), test (14), and release (15) of the product.

8. Process (10) as per any of the preceding claims
wherein
the process (10) pertains to a system (20), hardware (21), and
software level (22) of the product.

9. Process (10) as per any of the preceding claims
wherein
the observer (16) is connected to an external system for hazard identification and analysis.

10. Process (10) as per Claim 9
wherein
the process (10) is cyclic and,
upon completion of one cycle of the process (10), the system is gradually improved prior to the subsequent cycle, such as by means of artificial intelligence.
